# EUROPEAN PATENT APPLICATION

(11) **EP 4 808 177 A1**
(43) Date of publication of application: **16.09.2026**
(21) Application number: 25465515.2
(22) Date of filing: 11.03.2025
(51) Int. Cl.: H04W 12/0433, H04W 12/041, H04W 12/47, H04W 12/00, H04L 9/08

(54) **SECURE TAG COMMUNICATIONS**

(71) Applicant: Vodafone Group Services Limited, Newbury RG14 2FN (GB)
(72) Inventor: KUMAR, Aditya, London W2 6BY (GB); KENNEDY, Ben, London W2 6BY (GB); LU, Yang, London W2 6BY (GB); STANCU, Dan, London W2 6BY (GB)
(74) Representative: Boult Wade Tennant LLP

(57) **Abstract**

Method and system for providing secure communications, the method comprising a reader interrogating a device, the reader having a reader identifier. The device responding to the reader interrogation by sending a device identifier to the reader. The reader generating an output by providing the reader identifier and the device identifier to a first algorithm. The reader sending the output to a management server as a key request. The management server validating the key request by providing the output to a second algorithm to generate a second output indicating validation status. When the key request is successfully validated, the management server generating a key and a temporary identifier by: generating data associated with the output, applying a combination of the output and the generated data to the second algorithm to generate the key, and generate a temporary identifier associated with the key. The management server sending the key and the temporary identifier to the reader. The reader and the management server storing the key and the temporary identifier.

## Description

### Field of the Invention

The present invention relates to a system and method for sharing keys and for providing secure communications between devices (tags), readers and management servers.

### Background of the Invention

RFID tags enable the identification of objects once they are interrogated by an RFID reader that provides power to the RFID tags (using RF energy). Each RFID tag will respond with a message, usually including a unique identifier. These data are used to identify objects attached to the RFID tags, such as warehouse inventory, retail stock or items to be protected from theft.

Services provided by RFID tags include inventory control and command. These services include but are not limited to automated warehousing, medical instrument inventory management, logistics tracking, automotive manufacturing, real-time inventory management (e.g., airport and shipping ports), fresh food supply chains, electronic shelf labels, online modification of medical instruments, greenhouse activation and deactivation, elderly healthcare and alerts, and electronic shelf labelling (alerts and feedback).

In a communications network, RFID tag readers can communicate with management servers over the network. This allows remote monitoring and data gathering as readers can be prompted to interrogate their local environment by management servers and the readers can send data obtained from local RFID tags to the requesting management server.

When sensitive services are provided by RFID tags, securing communications between the reader and the management server becomes important but current system do not provide sufficient security.

Therefore, there is required a method and system that overcomes these problems.

### Summary of the Invention

A management server controls one or more readers (or reader devices). Each reader can interrogate and obtain information from one or more RFID tags (e.g., singularly or simultaneously). The RFID tags are "SIMless" devices. Each reader and each device have unique identifiers.

A reader interrogates a device (e.g., when prompted to by a management server) and the device replies with its identifier. The device may be passively powered by the interrogation signal (e.g., RF) of the reader, for example. The reader applies the received device identifier and its own reader identifier to an algorithm (first algorithm). This generates an output. The output is sent to the management server as a key request, which validates the key request by providing the output to a second algorithm, which generates a second output. The management server now generates a key and a temporary identifier. This is achieved by the management server generating data, which is associated with the output from the first algorithm. This may be a random number and the association may take the form of storing the random number with the output. The output and the generated number are combined (e.g., concatenated) and applied to a second algorithm, which outputs a key.

An identifier (preferably unique) is generated and associated with the key (e.g., to be stored together with the key). The identifier is a temporary identifier as it may expire or be replaced in the future (e.g., together with the key). The key and temporary identifier are sent to the reader and stored by the reader and the management server. The key may be retrieved using the temporary identifier by both the reader and the management server whenever data relating to the device is sent between the reader and the management server.

In accordance with a first aspect there is provided a method for providing secure communications, the method comprising:
a reader interrogating a device, the reader having a reader identifier;
the device responding to the reader interrogation by sending a device identifier to the reader;
the reader generating an output by providing the reader identifier and the device identifier to a first algorithm;
the reader sending the output to a management server as a key request;
the management server validating the key request by providing the output to a second algorithm to generate a second output indicating validation status;
when the key request is successfully validated, the management server generating a key and a temporary identifier by:
   generating data associated with the output,
   applying a combination of the output and the generated data to the second algorithm to generate the key, and
   generate a temporary identifier associated with the key;
the management server sending the key and the temporary identifier to the reader; and
the reader and the management server storing the key and the temporary identifier. Therefore, keys may be shared securely and easily so that communications can be secured for specific device and reader combinations.

Preferably, the method may further comprise:
after the reader storing the key and the temporary identifier, the reader interrogating the device;
the reader encrypting a message using the key, wherein the message includes data associated with the device;
the reader sending the encrypted message to the management server with the temporary identifier;
the management server retrieving the stored key using the temporary identifier included with the encrypted message; and
the management server decrypting the message using the stored key. Once the method has executed, further communications for the same device and reader combination do not require regeneration of the key as it can be retrieved based on the temporary identifier.

Optionally, the reader may retrieve the key based on the device identifier before encrypting the message. This can be repeated for future messages until the key expires (if it has an expiry date).

Preferably, the data associated with the output may be a random number. Other data may be generated. The random number may take different data as its seed, for example.

Optionally, the first algorithm and the second algorithm are different algorithms. They may also be the same algorithm.

Optionally, the method may further comprise the step of securing communications between the reader and the management server using the key. The key may be used for other purposes, such as signing messages or validating data (on the reader or management server).

Optionally, the step of the management server validating the key request may further comprise the step of the management server validating a combination of the device identifier and the reader identifier. This may be achieved by querying a database of valid combinations or by using another validation technique.

Optionally, the step of the management server validating the key request further comprises the management server executing an algorithm on the device identifier and/or the reader identifier. This could be the same or different to the first and/or second algorithms.

Optionally, the first and/or algorithm may be:
Luhn's algorithm;
modulo 10; or
Luhn's algorithm using ASCII code arithmetic. Other algorithms may be used, such as those described in 3GPP TS33.501, for example.

Optionally, the method may further comprise the step of the reader retrieving the key from the memory based on the temporary identifier (e.g., from memory) before using the key to communicate with the management server.

Optionally, the device may be any of:
a tag;
a radio frequency identification (RFID) device; or
an ambient internet of things (A-loT) device. Other device types may be used.

Preferably, the combination of device identifier and reader identifier is unique.

Optionally, the device identifier and/or the reader identifier are alphanumeric. Other formats may be used.

In accordance with a second aspect, there is provided a reader or reader device having a reader identifier comprising:
a processor; and
memory storing computer-executable instructions that, when executed by the processor, cause the reader to:
   interrogate a device;
   receive from the device a device identifier;
   generate an output by providing the reader identifier and the device identifier to a first algorithm;
   send the output to a management server as a key request;
   receive from the management server a generated key and a temporary identifier, wherein the key is generated by the application of a function to data comprising a combination of the device identifier and the reader identifier; and
   store the key and the temporary identifier.

In accordance with a third aspect, there is provided a management server (or any other type of server) comprising:
a processor; and
memory storing computer-executable instructions that, when executed by the processor, cause the management server to:
   receive from a reader a key request comprising an output formed by providing a device identifier and a reader identifier to a first algorithm;
   validate the key request by providing the output to a second algorithm to generate a second output indicating validation status;
   when the key request is successfully validated, generating a key and a temporary identifier by:
      generating data associated with the output,
      applying a combination of the output and the generated data to the second algorithm to generate the key, and
      generate a temporary identifier associated with the key; and
   send the generated key to the reader. The server or management server may be a virtual server or a physical machine.

In accordance with a fourth aspect, there is provided a system comprising:
one or more devices having device identifiers;
the reader, as described above; and
the management server, as described above.

Optionally, the system may further comprise:
a database storing valid combinations of device identifiers and reader identifiers. The system may comprise any number of management servers, devices and/or readers.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magnetooptic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a system for interrogating devices by a reader;
FIG. 2 shows a flowchart of a method for operating the system of Figure 1;
FIG. 3 shows a schematic diagram of a computer system used to implement the method of Figure 2; and
FIG. 4 shows a sequence diagram illustrating the method of Figure 2.

It should be noted that the figures are illustrated for simplicity and are not necessarily drawn to scale. Like features are provided with the same reference numerals.

### Detailed description of the preferred embodiments

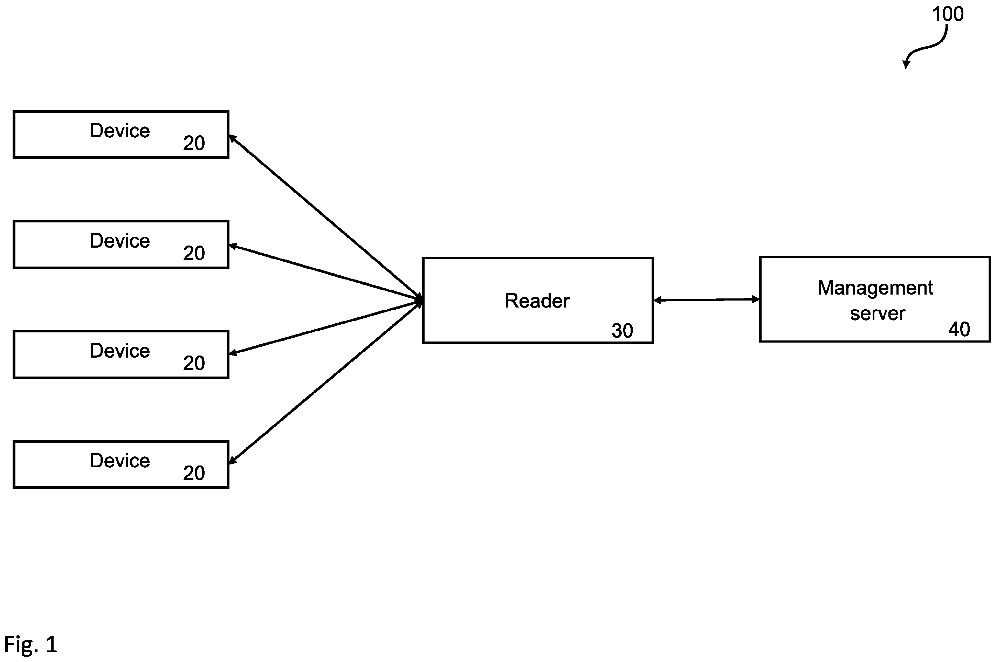

Figure 1 shows a schematic diagram of a system 100 for interrogating or reading one or more devices 20 using a reader device 30 that is in communication with and takes commands from a management server 40 or other external entity. The management server 40 can communicate with, manage, send and receive commands and data to a plurality of reader devices 30 even though only one reader device 30 is shown in this figure. It should be noted that the reader device 30 may itself be a device or may otherwise contain components and functionality to communicate with the management server 40 (e.g., using a cellular network). The device 20 may also be described as a tag or device.

The one or more device 20 can be passively powered, for example. Interrogation may involve the reader device 30 providing radio frequency (RF) energy that can be harvested by each device 20, used to temporarily power the device 20, and also prompt the one or more device 20 to respond to the interrogation signal by providing data, an acknowledgement or other signal (e.g., backscatter). The reader device 30 can use the information contained within the responses directly and/or transmit this information or command data to the management server 40 for further processing. The device 20 may be a SIMless device (i.e., not having a SIM).

The one or more devices 20 may use different sources of power. However, they typically do not contain a battery (primary or secondary) to provide long term power (e.g., greater than a few minutes to an hour) that can be recharged by a wired or wireless source. Instead, the one or more devices 20 may contain a relatively simple energy harvesting component such as a coil or antenna, a solar cell, a thermocouple, a mechanical energy harvester or any other component. The harvested energy may be stored for a short period of time (e.g., one to two seconds to 10 minutes). The energy may be stored by one or more capacitors and/or inductors or a small secondary battery (e.g., 1-10 mWh). This harvested electrical energy may be used to respond to one or more interrogations from the device reader 30. However, when insufficient energy is available or has been used up (depleted) then the device 20 may be unable to respond until the energy store has been replenished sufficiently. Each device 20 may harvest and store more energy than required for a particular single response.

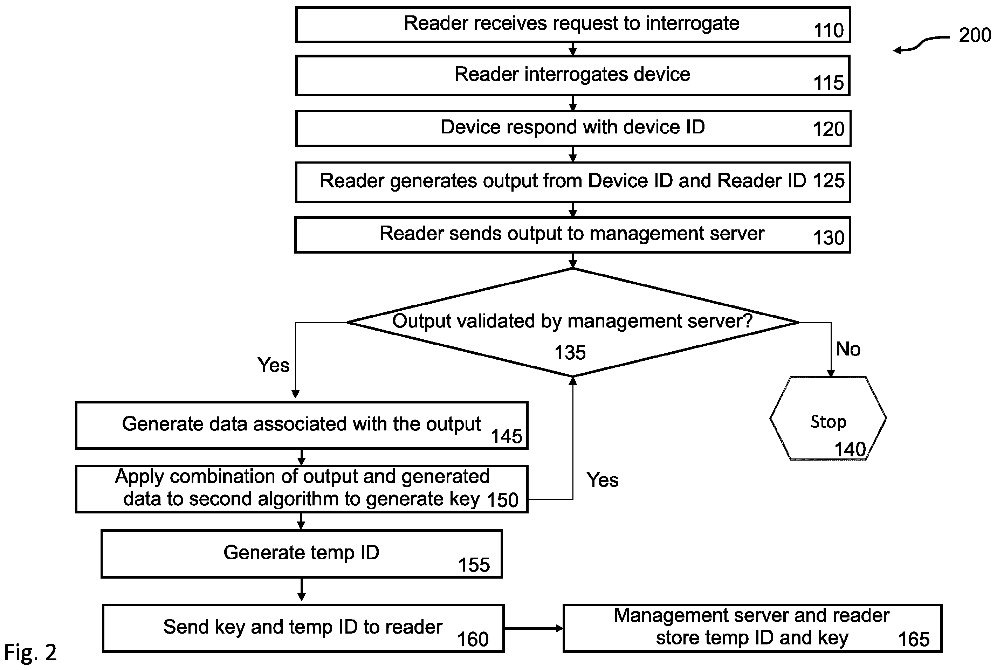

Figure 2 shows a flow chart of a method 200 for operating the system 100 of Figure 1. At step 110 the reader 30 receives a request to interrogate one or more devices 20. This request may be received (e.g., over a wired, wireless, cellular or other communication mechanism). The request may be received from a management server 40 or from a different entity. The reader 30 has its own identifier (reader ID), which is preferably a unique identifier.

The request prompts the reader 30 to interrogate the device 20 or devices at step 115. Interrogation may take the form or an RF signal produced by an antenna of the reader 30 being received by an antenna of the device 20. For passive devices powered by the interrogation signal, the RF signal provides enough energy for the device or devices to respond (with a response RF signal) containing their device identifier (ID), which is preferably a unique identifier, at step 120. The reader 30 uses the received device ID and its own reader ID to generate an output using a first algorithm or function at step 125. The function may be Luhn's Algorithm adding ASCII code arithmetic, for example. However, other algorithms or functions may be used.

The reader 30 sends the output of the algorithm or function in the form of a key request to the management server 40 at step 130. The key request may contain only the output or other data as well. The management server 40 receives the output (e.g., over a cellular communications network). At step 135 the management server 40 validates the key request by providing the output to a second algorithm or function. The second algorithm may be the same or different to the first algorithm and may be Luhn's Algorithm adding ASCII code arithmetic, for example.

If validation fails (the "no" outcome from step 135), the method stops at step 140. If validation is successful (the "yes" outcome from step 135), the method moves onto step 145, which generates data associated with the output. For example, the data associated with the output may be a random number (which may be saved or otherwise associated with the output by the management server 40). At step 150, a combination of the output (received from the reader 30) and the generated data (whatever form this takes) applied to the second algorithm to generate a key. A temporary identifier (ID) is generated by the management server 40 at step 155. The key and the temporary ID are sent to the reader 30 at step 160. The management server 40 and the reader 30 store the temporary ID and the key (preferably locally in each respective device) at step 165.

A key is now shared between the reader 30 and the management server 40. Now that a key has been agreed, it may be used to conduct secure communications between the reader 30 and the management server 40 when communicating data from (and from) the particular device 20 used to generate the key. For future communications, the key does not need to be regenerated as the reader 30 and management server 40 can retrieve the stored key based on the temporary ID. The reader 30 and management server include a computer system 200 used to implement the method 10.

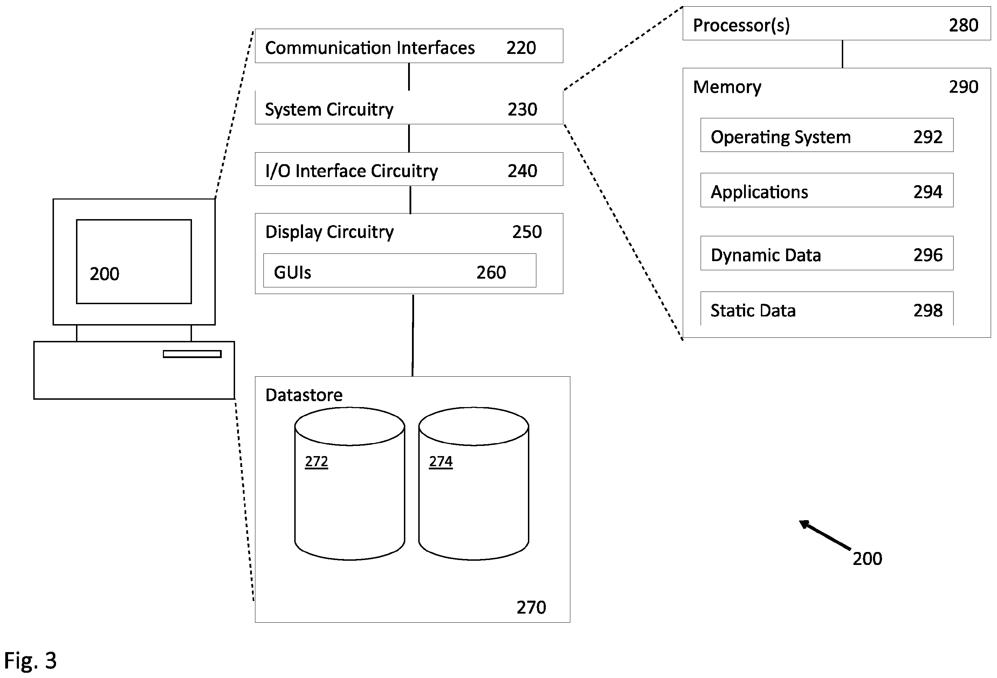

As shown in Figure 3, the computer system 200 includes a number of components including communication interfaces 220, system circuitry 230, input/output (I/O) circuitry 240, display circuitry and interfaces 250, and a datastore 270. The system circuitry 220 can include one or more processors or CPUs 280 and memory 290. The system circuitry 230 may include any combination of hardware, software, firmware, and/or other circuitry. The system circuitry 230 may be implemented, with one or more systems on a chip (SoC), application specific integrated circuits (ASIC), microprocessors, and/or analogue and digital circuits.

The display circuitry may provide one or more graphical user interfaces (GUIs) 260 and the I/O interface circuitry 240 may include touch sensitive or non-touch displays, sound, voice or other recognition inputs, buttons, switches, speakers, sounders, and other user interface elements. The I/O interface circuitry 240 may include microphones, cameras, headset and microphone input /output connectors, Universal Serial Bus (USB) connectors, and SD or other memory card sockets. The I/O interface circuitry 240 may further include data media interfaces (e.g., a CD-ROM or DVD drive) and other bus and display interfaces.

The memory 290 may include volatile (RAM) or non-volatile memory (e.g., ROM or Flash memory). The memory may store the operating system 292 of the computer system 200, applications or software 294, dynamic data 296, and/or static data 298. The datastore or data source 270 may include one or more databases 272, 274 and/or a file store or file system, for example.

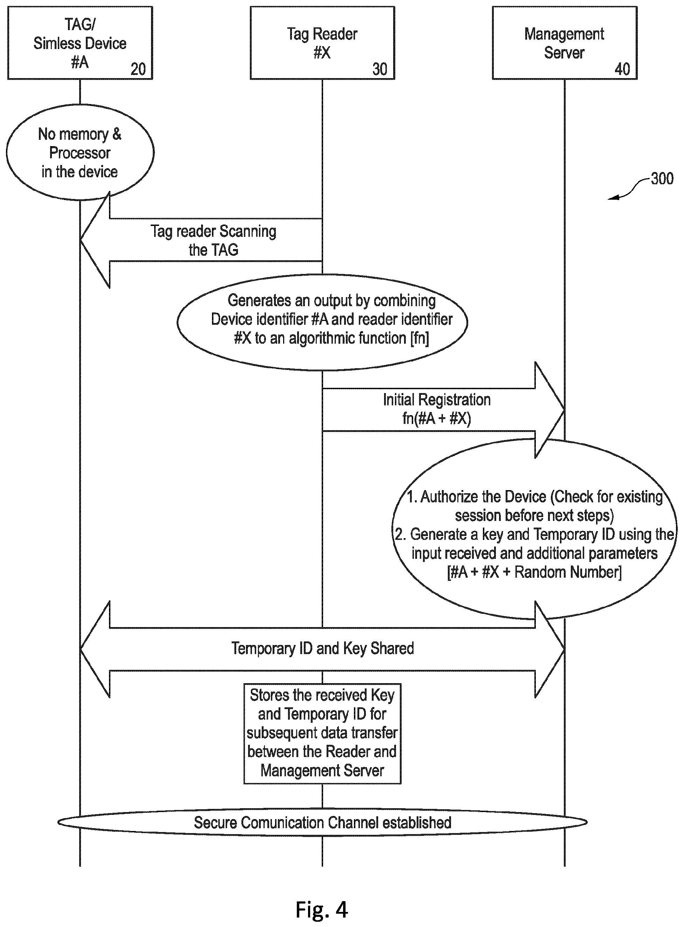

Figure 4 shows a sequence diagram illustrating an example implementation of the method 100 described with reference to Figure 2. The sequence diagram 300 illustrates the interactions between one or more devices 20, the reader 30 and the management server 40. The management server 40 may be located within a core network (e.g., of cellular network), for example.

The device 20 has an identifier #A and the reader 30 has an identifier #X in this example. #A and #X may represent characters forming the identifiers, which may take a numeric format or an alphanumeric format, for example. The sequence diagram 300 starts at the portion of the method 100, where the reader 30 scans or interrogates the device 20. The reader 30 may be prompted to do so by the management server 40 or by another entity (e.g., a separate server). In this example, the device 20 does not contain any memory or sophisticated processor but instead comprises a circuit that responds to an interrogating by transmitting its identifier #A).

After scanning the device 20, the reader uses the returned device ID (A#) together with its own reader ID (#X) to generate an algorithm output from algorithmic function [fn]. This initial registration, output or key request takes the form of Equation 1: $fn \left(#A+#X\right) = key request$

The management server 40 receives the key request from the reader 30 and validates these data (1. in Figure 4). As part of this validation, the management server 40 may query its own data store or database 270 to determine if the combination of #A and #X has already been processed with a stored key and temporary ID. If an entry exists, then this is returned and no new key needs to be generated. In an example implementation, keys may have an expiry time or date requiring regeneration even if the combination has been processed in the past. The data store or database 270 may contain a list of valid combinations of device ID and reader ID. Therefore, querying the database may be one way of validating that the combination (fn(#A + #X)). An entry in the database may be stored for each valid combination, for example.

Once the key request is successfully validated, the management server 40 generates both a key and a temporary identifier. These may be generated together or separately. In this example implementation, the key (Ki) and the temporary identifier (Ti) are generated together using a further algorithm or function that may be the same or different to Equation 1 (2. In Figure 4). Additional data associated with the combination (#A + #X) may be a Random Number (RAND). Equation 2 illustrates the generation of Ki and Ti: $fn \left(#A+#X+RAND\right) = Ki & Ti$

The random number that is generated is associated with the combination of #A and #X. For example, the random number may be generated using #A + #X as a seed or RAND may be generated and stored together with #A and #X. In any case, Ki and Ti are shared with the reader 30. The reader 30 and the management server 40 store Ki and Ti together with data identifying #A and #X so that Ki and Ti can be retrieved every time the particular reader 30 and particular device 20 communication and the reader 30 sends information associated information back to the management server 40. Ti may also be used to retrieve Ki. Ti may be included in any messages encrypted with Ki sent between the reader 30 and the management server 40 providing the other entity with a way to retrieve Ki (i.e., using Ti).

Communications between the reader 30 and management server 40 (and ultimately between the device 20 and the management server 40) are secured using the key with the correct key being identified using the temporary ID (Ti).

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, further example algorithms may include any of those described in 3GPP TS33.501 (5G system). A plurality of devices may be interrogated simultaneously. The system may comprise a plurality of readers.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for providing secure communications, the method comprising:
a reader interrogating a device, the reader having a reader identifier;
the device responding to the reader interrogation by sending a device identifier to the reader;
the reader generating an output by providing the reader identifier and the device identifier to a first algorithm;
the reader sending the output to a management server as a key request;
the management server validating the key request by providing the output to a second algorithm to generate a second output indicating validation status;
when the key request is successfully validated, the management server generating a key and a temporary identifier by:
generating data associated with the output,
applying a combination of the output and the generated data to the second algorithm to generate the key, and
generate a temporary identifier associated with the key;
the management server sending the key and the temporary identifier to the reader; and
the reader and the management server storing the key and the temporary identifier.

2. The method of claim 1 further comprising:
after the reader storing the key and the temporary identifier, the reader interrogating the device;
the reader encrypting a message using the key, wherein the message includes data associated with the device;
the reader sending the encrypted message to the management server with the temporary identifier;
the management server retrieving the stored key using the temporary identifier included with the encrypted message; and
the management server decrypting the message using the stored key.

3. The method of claim 2, wherein the reader retrieves the key based on the device identifier before encrypting the message.

4. The method according to any previous claim, wherein the data associated with the output is a random number.

5. The method according to any previous claim, wherein the first algorithm and the second algorithm are different algorithms.

6. The method according to any previous claim further comprising the step of securing communications between the reader and the management server using the key.

7. The method according to any previous claim, wherein the step of the management server validating the key request further comprises the step of the management server validating a combination of the device identifier and the reader identifier.

8. The method according to any previous claim, wherein the step of the management server validating the key request further comprises the management server executing an algorithm on the device identifier and/or the reader identifier.

9. The method according to any previous claim, wherein the first and/or algorithm are:
Luhn's algorithm;
modulo 10; or
Luhn's algorithm using ASCII code arithmetic.

10. The method according to any previous claim further comprising the step of the reader retrieving the key based on the temporary identifier before using the key to communicate with the management server.

11. The method according to any previous claim, wherein the device is any of:
a tag;
a radio frequency identification, RFID, device; or
an ambient internet of things, A-loT, device.

12. The method according to any previous claim, wherein the combination of device identifier and reader identifier is unique.

13. The method according to any previous claim, wherein the device identifier and/or the reader identifier are alphanumeric.

14. A reader having a reader identifier comprising:
a processor; and
memory storing computer-executable instructions that, when executed by the processor, cause the reader to:
interrogate a device;
receive from the device a device identifier;
generate an output by providing the reader identifier and the device identifier to a first algorithm;
send the output to a management server as a key request;
receive from the management server a generated key and a temporary identifier, wherein the key is generated by the application of a function to data comprising a combination of the device identifier and the reader identifier; and
store the key and the temporary identifier.

15. A management server comprising:
a processor; and
memory storing computer-executable instructions that, when executed by the processor, cause the management server to:
receive from a reader a key request comprising an output formed by providing a device identifier and a reader identifier to a first algorithm;
validate the key request by providing the output to a second algorithm to generate a second output indicating validation status;
when the key request is successfully validated, generating a key and a temporary identifier by:
generating data associated with the output,
applying a combination of the output and the generated data to the second algorithm to generate the key, and
generate a temporary identifier associated with the key; and
send the generated key to the reader.

16. A system comprising:
one or more devices having device identifiers;
the reader of claim 14; and
the management server of claim 15.

17. The system of claim 16 further comprising:
a database storing valid combinations of device identifiers and reader identifiers.
